(19) **Europäisches Patentamt / European Patent Office / Office européen des brevets**

(11) **EP 2 908 122 B1**

(12) **FASCICULE DE BREVET EUROPEEN**

(45) Date de publication et mention
de la délivrance du brevet:
**30.03.2022  Bulletin 2022/13**

(21) Numéro de dépôt: **15154415.2**

(22) Date de dépôt: **10.02.2015**

(51) Classification Internationale des Brevets (IPC):
**G01N 27/18** [(2006.01)]

(52) Classification Coopérative des Brevets (CPC):
**G01N 27/18**

(54) **Capteur de concentration de gaz a structure suspendue**

Gaskonzentrationssensor mit Hängestruktur

Gas concentration sensor with suspended structure

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **13.02.2014  FR 1451134**

(43) Date de publication de la demande:
**19.08.2015  Bulletin 2015/34**

(73) Titulaire: **Commissariat à l'Énergie Atomique
et aux Énergies Alternatives
75015 Paris (FR)**

(72) Inventeurs:
- **Ruellan, Jérémie
  38000 Grenoble (FR)**
- **Duraffourg, Laurent
  38500 VOIRON (FR)**

(74) Mandataire: **Brevalex
95, rue d'Amsterdam
75378 Paris Cedex 8 (FR)**

(56) Documents cités:
**WO-A1-2004/077037    WO-A1-2007/117156
FR-A1- 2 824 911    GB-A- 2 426 592
US-A1- 2010 154 510**

- LEE A P ET AL: "Temperature modulation in
  semiconductor gas sensing", SENSORS AND
  ACTUATORS B: CHEMICAL: INTERNATIONAL
  JOURNAL DEVOTED TO RESEARCH AND
  DEVELOPMENT OF PHYSICAL AND CHEMICAL
  TRANSDUCERS, ELSEVIER S.A, CH, vol. 60, no.
  1, 2 novembre 1999 (1999-11-02), pages 35-42,
  XP004244598, ISSN: 0925-4005, DOI:
  10.1016/S0925-4005(99)00241-5
- TRIANTAFYLLOPOULOU R ET AL: "Alternative
  micro-hotplate design for low power sensor
  arrays", MICROELECTRONIC ENGINEERING,
  ELSEVIER PUBLISHERS BV., AMSTERDAM, NL,
  vol. 83, no. 4-9, 2 mars 2006 (2006-03-02) , pages
  1189-1191, XP024955024, ISSN: 0167-9317, DOI:
  10.1016/J.MEE.2006.01.224 [extrait le 2006-04-01]

**Description**

**DOMAINE TECHNIQUE ET ART ANTÉRIEUR**

La présente invention se rapporte à un capteur de concentration de gaz à structure suspendue.

Il existe des capteurs de concentration de gaz utilisant la mesure d'un échange de chaleur entre le corps du capteur et le milieu gazeux dans lequel le capteur est disposé. La variation du milieu fluidique modifie les échanges thermiques, en mesurant la modification des échanges thermiques, on peut déterminer la concentration en gaz du milieu gazeux.

Le document WO2001/044547 décrit un capteur TCD ("Thermal Conductivity Detectors" en terminologie anglo-saxonne) utilisant la variation de la conductivité thermique pour déterminer la composition de l'environnement gazeux dans lequel il est disposé. Celui-ci est disposé en sortie d'une colonne de chromatographie. Ce capteur TCD comporte une plaque support allongée, un élément chauffant situé sur la plaque support. La variation de tension est mesurée aux bornes de la plaque support chauffée pour déterminer la variation de résistance électrique qui dépend de la température de la plaque support et qui est représentative des échanges thermiques entre la plaque support et l'environnement gazeux; ces échanges thermiques dépendent de la composition de l'environnement gazeux. Un tel capteur est de fabrication complexe puisqu'elle nécessite la réalisation de la plaque support et ensuite celle de l'élément chauffant.

La détection se fait par une mesure d'amplitude de la variation de la résistance électrique. Or des phénomènes peuvent parasiter la mesure dans le cas d'une mesure en amplitude. En particulier, dans les nanostructures, le rapport surface/volume étant important, des phénomènes de surface non souhaités, par exemple des phénomènes d'adsorption, peuvent jouer sur la valeur de la résistance électrique du dispositif et donc sur la mesure de l'amplitude.

En outre, de manière générale on cherche à réduire la taille des capteurs pour faciliter leur intégration et accroître le nombre de domaines d'application.

D'autres dispositifs de détection de gaz sont décrits dans US 2010/154510 A1, GB 2 426 592 A et WO 2007/117156 A1.

**EXPOSÉ DE L'INVENTION**

C'est par conséquent un but de la présente invention d'offrir un dispositif de mesure de concentration d'un gaz ne présentant pas les inconvénients ci-dessus, et d'offrir en particulier un dispositif de mesure de concentration de gaz plus robuste, i.e. offrant moins de sensibilité aux phénomènes parasites que les dispositifs de mesure en amplitude.

C'est également un but de la présente invention d'offrir un capteur de flux thermique de réalisation plus simple que celle des capteurs de l'état de la technique.

Le but précédemment énoncé est atteint par un dispositif de mesure de concentration d'au moins un gaz donné, le dispositif de mesure comportant une structure suspendue, des moyens de polarisation dynamique de ladite structure suspendue formant des moyens d'excitation dynamique et des moyens de mesure du signal de réponse qui est la variation dynamique de la tension électrique aux bornes de la structure suspendue, et des moyens de traitement dudit signal de réponse. Sous l'effet du signal d'excitation dynamique, la structure suspendue est échauffée, sa température va alors varier par échange thermique avec l'environnement gazeux dont la composition change. La fréquence d'excitation est choisie de sorte qu'un déphasage existe entre le signal d'excitation et le signal de réponse. La variation de ce déphasage est fonction de la conductivité thermique du gaz et la capacité thermique du gaz. Lors de la modification de la concentration du gaz dans l'environnement gazeux, le déphasage varie. A partir de la mesure de la variation du déphasage, il est possible de déterminer la concentration de l'analyte gazeux.

On entend par "polarisation dynamique" l'application d'un courant électrique alternatif de période donnée et par "variation dynamique de la tension électrique" la variation de tension due à la variation de la résistance électrique de la structure suspendue qui résulte de la variation dans le temps de la température de la structure suspendue.

La fréquence d'excitation en tension est fixée proche ou égale à la moitié de la fréquence de coupure thermique du système dans un état donné, par exemple en l'absence d'analyte. On mesure la variation du déphasage, à partir de cette variation on peut déterminer le temps de propagation du mélange gazeux et en déduire la concentration de l'analyte gazeux.

Dans un autre mode de réalisation, on fixe le déphasage, et on mesure la variation de la fréquence de coupure. De préférence, on utilise une boucle de verrouillage de phase (PLL) dans laquelle la valeur de la phase est corrigée en temps réel, on peut alors fonctionner au point de plus grande sensibilité.

Le fait d'utiliser la variation du déphasage entre le signal d'excitation et le signal de réponse est très intéressant car les inventeurs ont déterminé que la mesure de cette variation de déphasage n'était pas affectée par les phénomènes parasites, contrairement à la mesure en amplitude.

La structure suspendue présente de préférence des dimensions suffisamment petites pour présenter un temps de réponse thermique très faible, permettant ainsi l'utilisation d'un signal modulé suffisamment élevée par rapport au temps de la mesure, par exemple de quelques centaines de Hz à quelques centaines de kHz. Il s'agit par exemple d'une structure nanométrique, tel qu'un nanofil ou une structure formant une grille.

Grâce à l'invention, on obtient des mesures plus fiables que des dispositifs de mesure en amplitude puisque le dispositif selon l'invention est peu, voire n'est pas sensible aux phénomènes parasites.

En outre, l'application de signaux d'excitation dynamique permet de rendre le capteur moins sensible aux dérives lentes, par exemple aux dérives de la température du milieu.

Le dispositif de mesure selon l'invention présente également une résolution élevée de la mesure de la température du système.

Cette invention permet en outre de réaliser des détecteurs performants de très petites tailles co-intégrables avec des technologies de la microélectronique et compatibles CMOS (VLSI).

Un tel capteur est particulièrement intéressant en tant que capteur de concentration de gaz utilisé dans et/ou en sortie d'une micro-colonne de chromatographie en phase gazeuse.

La présente invention a alors pour objet un capteur de concentration d'au moins une espèce gazeuse donnée comportant au moins une structure suspendue dans un environnement gazeux par rapport à un support, ladite structure suspendue étant en un matériau conducteur électrique, des moyens de polarisation dudit élément suspendu et des moyens de mesure de la variation de la tension électrique aux bornes de la structure suspendue, les moyens de polarisation étant formés pas une source de courant alternatif dont l'intensité assure un échauffement de la structure suspendue par effet Joule et dont la fréquence est telle qu'elle fait apparaître un déphasage entre un signal généré par les moyens de polarisation et un signal mesuré par les moyens de mesure, et des moyens de détermination d'une variation de déphasage du à une variation de concentration de l'espèce gazeuse et des moyens de détermination de la variation de concentration de ladite espèce gazeuse à partir de la variation de déphasage.

L'environnement gazeux comprend un gaz porteur et l'espèce gazeuse à mesurer. Par ailleurs à un instant donné le capteur ne peut mesurer qu'une espèce gazeuse à la fois. Pour mesurer différentes espèces gazeuses, les espèces sont préalablement séparées par exemple par une colonne de chromatographie disposée en amont du capteur.

De préférence, ladite structure présente un temps de réponse thermique faible et notamment inférieure 100ms.

La fréquence des moyens de polarisation est fixée.

La fréquence en tension des moyens de polarisation est proche de ou égale à la moitié d'une fréquence de coupure d'une fonction de transfert thermique du capteur dans un environnement gazeux donné.

La fréquence de coupure peut être celle de la fonction de transfert thermique du capteur dans un environnement gazeux en l'absence de l'espèce gazeuse dont on souhaite mesurer la concentration.

Dans un autre mode de réalisation, le capteur de concentration comporte une boucle à verrouillage de phase dans laquelle une valeur de déphasage est fixée, une valeur de la variation du déphasage due à la variation de concentration de l'espèce gazeuse est mesurée et la fréquence des moyens de polarisation est modifiée de sorte que le déphasage mesuré soit égale au déphasage fixé, la modification de la fréquence étant utilisée pour déterminer la variation de concentration.

Par exemple, la structure suspendue est formée par au moins un nanofil. Le nanofil a de préférence une longueur inférieure à 1mm et une section inférieure à $1\mu m \times 1\mu m$.

Dans un exemple avantageux, le capteur de concentration comporte plusieurs structures suspendues, chacune des structures suspendues étant polarisée et un signal étant mesuré aux bornes de chacune des structures suspendues par les moyens de mesure, ces signaux étant moyennés.

La présente invention a également pour objet un dispositif de mesure de concentration d'au moins une espèce gazeuse contenue dans un environnement gazeux comportant une colonne de chromatographie et au moins un capteur de concentration selon l'invention, le capteur étant disposé en sortie ou dans la colonne de chromatographie.

La présente invention a également pour objet un procédé de mesure de la concentration d'au moins une espèce gazeuse au moyen d'un capteur de concentration décrit dans les paragraphes précédents utilisant la structure suspendue dans un environnement gazeux, ledit procédé comportant les étapes:

- application d'un signal polarisation de la structure suspendue en matériau conducteur électrique à une fréquence donnée de sorte à échauffer la structure suspendue et de sorte qu'un déphasage existe entre le signal de polarisation et une variation de température de la structure suspendue,
- mesure de la variation du déphasage,
- détermination de la variation de concentration de l'espèce gazeuse.

La fréquence en tension est fixée à la moitié de la fréquence de coupure d'une fonction de transfert thermique caractéristique des échanges thermiques de la structure suspendue avec l'environnement gazeux pour un environnement gazeux donné. Par exemple, dans l'environnement gazeux donné, la concentration en espèce gazeuse est nulle.

Dans un mode de mesure, le déphasage est fixé à une valeur de commande, les variations du déphasage par rapport à la valeur de commande sont mesurées lors de la variation de concentration de l'espèce gazeuse et la fréquence est modifiée de sorte à rapprocher la valeur du déphasage à la valeur de commande.

De préférence, l'espèce gazeuse étant en mélange avec un gaz porteur de sorte à former l'environnement gazeux, le gaz porteur est choisi de sorte à présenter un temps de propagation thermique différent de celui de l'espèce gazeuse.

## BRÈVE DESCRIPTION DES DESSINS

La présente invention sera mieux comprise à l'aide de la description qui va suivre et des dessins en annexes sur lesquels :

- la figure 1 est une représentation schématique d'un exemple de capteurs à un nanofil,
- la figure 2 est une représentation de la fonction de transfert thermique du système selon l'invention,
- les figures 3A à 3C sont des vues de dessus représentées schématiquement d'exemples de réalisation de structures suspendues selon l'invention,
- les figures 4A à 4H sont des représentations schématiques de différentes étapes d'un exemple de procédé de réalisation d'un capteur selon l'invention,
- la figure 5 est une représentation schématique d'un exemple de boucle de verrouillage pouvant être mis en œuvre dans la présente invention.

## EXPOSÉ DÉTAILLÉ DE MODES DE RÉALISATION PARTICULIERS

Le capteur de concentration de gaz selon l'invention est destiné à mesurer la concentration d'au moins un analyte gazeux mélangé à un gaz porteur. La concentration mentionnée dans la description qui va suivre est donc celle d'un analyte.

Dans la description qui va suivre, le déphasage désigne le déphasage entre le signal de réponse ou de sortie et le signal d'excitation. Le signal de réponse qui peut également être désigné signal de sortie est la variation de température de la structure suspendue, cette variation est obtenue en mesurant la variation de résistance électrique de la structure suspendue, qui est elle-même obtenue en mesurant la variation de tension aux bornes de la structure suspendue.

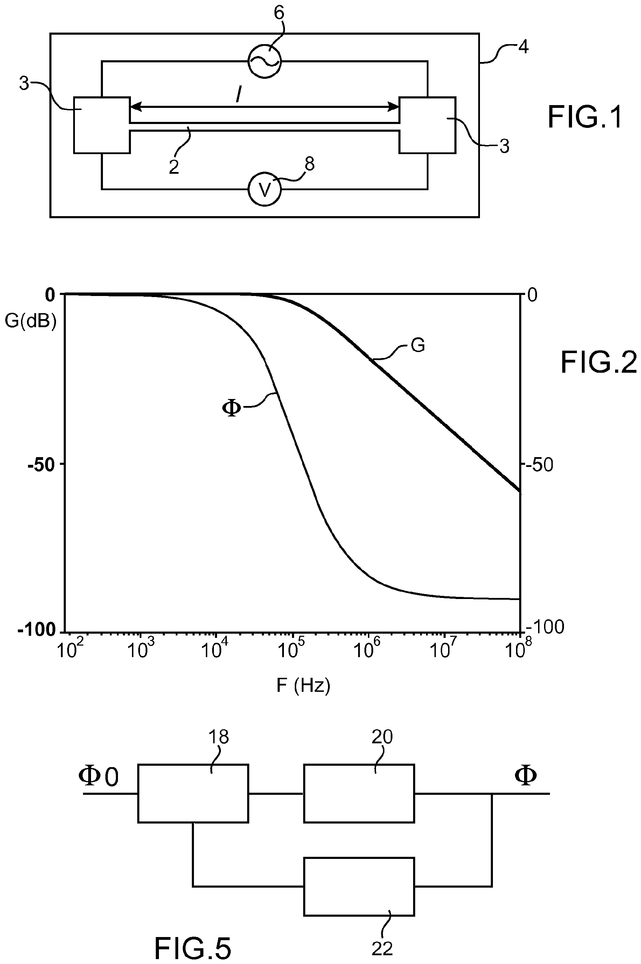

Sur la figure 1, on peur voir un exemple de dispositif de mesure selon l'invention comportant une structure suspendue 2 par rapport à un support 4 au niveau de ses deux extrémités longitudinales. Dans l'exemple représenté, la structure suspendue est formée par un nanofil 2 ancré sur le support par des plots d'ancrage 3 formant plots de contact.

Selon l'invention, la structure suspendue est telle qu'elle permet une polarisation en courant de la structure afin de pouvoir la chauffer et/ou de pouvoir mesurer un signal de détection à ses bornes, et présente des dimensions suffisamment petites pour présenter un temps de réponse thermique faible, par exemple inférieur à 10 ms, permettant un temps de réponse global du capteur rapide.

Dans la présente demande, on entend par "structure suspendue présentant un temps de réponse thermique faible" une structure suspendue qui se thermalise en moins de 100 ms, et préférentiellement en moins de 10ms i.e. dont la température se modifie pour atteindre une autre valeur homogène sur toute la structure en moins de 100 ms et préférentiellement en moins de 10ms sous l'effet d'un élément extérieur, par exemple la concentration de l'analyte à mesurer. Le temps de réponse est fixé principalement par le gaz porteur et par la configuration de la structure, par exemple l'entrefer entre la structure suspendue et le support et les caractéristiques géométriques de la structure suspendue.

Dans le cas d'un nanofil en silicium, sa longueur est avantageusement inférieure à 1mm et sa largeur et l'épaisseur du nanofil sont avantageusement comprises entre 1nm et $1\mu m$.

De préférence, la structure suspendue est en silicium monocristallin dopé P, mais elle peut également être réalisée en silicium monocristallin dopé N, dans un autre semi-conducteur dopé N ou P ou dans un métal ou en alliage métallique par exemple en siliciure par exemple NiSi, PtSi... La structure suspendue peut également être réalisée à l'aide d'un ensemble bicouche formé d'un matériau isolant électrique et thermique et d'un métal ou alliage métallique.

Dans la description qui va suivre, il est fait usage de l'expression "les bornes du nanofil", il s'agit des plots de contact du nanofil sur le support qui sont en général formés sur les plots d'ancrage du nanofil sur le support.

Le dispositif de mesure comporte également des moyens d'excitation dynamique ou modulée formés par des moyens de polarisation alternative 6 reliés au nanofil 2 et des moyens de détection de la variation de tension aux bornes du nanofil, formés par exemple par un voltmètre 8.

Le courant alternatif imposé par les moyens d'excitation 6 assure un échauffement dynamique du nanofil par effet Joule. L'application d'un signal d'excitation modulé est rendu possible grâce aux très faibles dimensions de l'élément suspendu 2, celui-ci présentant alors une très faible inertie thermique et donc une réponse thermique très rapide.

La fréquence en tension des moyens de polarisation est proche ou égale à la moitié de la fréquence de coupure de la fonction de transfert thermique de la structure suspendue qui caractérise la capacité de la structure suspendue à échanger la chaleur avec le mélange gazeux.

Le fonctionnement du dispositif de mesure de la figure 1 va maintenant être expliqué.

Le nanofil 2 suspendu est disposé dans un mélange gazeux à analyser. Le mélange gazeux est par exemple formé d'un gaz porteur et d'un analyte dont on veut déterminer la concentration.

Le nanofil 2 est échauffé par passage du courant alternatif. Par effet Joule, celui-ci génère une puissance thermique provoquant son auto-échauffement. L'élévation de température du nanofil dépend des transferts de chaleur du nanofil vers l'environnement gazeux et vers les ancrages. Ce sont principalement les transferts avec l'environnement qui contrôlent l'échauffement du nanofil.

La fréquence d'excitation en tension est fixée à une valeur telle qu'un déphasage existe entre la variation de température du nanofil et la variation du courant, cette fréquence est cependant suffisamment faible pour que la température du nanofil ait le temps de varier.

La fréquence d'excitation en tension est proche de ou égale à ½ de la fréquence de coupure de la fonction de transfert thermique du système dans un état donné, par exemple en l'absence d'espèce gazeuse dans l'environnement gazeux. En se plaçant à cette fréquence dans un état donné de référence, par exemple l'état en absence d'espèce gazeuse un déphasage, dit déphasage de référence, apparaît. Lorsque la concentration de l'espèce gazeuse varie par rapport à la concentration de l'état de référence, le déphasage entre le signal d'excitation et le signal de réponse augmente et est suffisamment grand pour être mesurable.

Le déphasage de référence est choisi non nul.

De manière préférée, la fréquence d'excitation en tension est comprise entre ¼ de la fréquence de coupure et la fréquence de coupure.

Lorsque la concentration en analyte dans l'environnement gazeux est modifiée, la conductivité thermique et la capacité thermique de l'environnement gazeux sont modifiées. Il en résulte que les échanges thermiques entre le nanofil et l'environnement gazeux sont modifiés. Le temps de réponse thermique du système est aussi modifié. Lorsque le signal d'excitation thermique est sinusoïdal et se fait selon une constante de temps proche du temps de réponse thermique du système, une modification de ce temps de réponse entraîne une variation du déphasage du signal de réponse. La mesure de la variation de déphasage entre le déphasage mesurée et le déphasage de référence non nul permet de remonter à la concentration du gaz comme nous allons l'expliquer ci-dessous.

Dans la suite de demande, la variation de déphasage correspond à la différence entre le déphasage mesurée et le déphasage de référence. Le déphasage de référence peut être celui du signal de réponse pour une concentration nulle ou non nulle.

Dans le cas où le capteur est associé à une colonne de chromatographie, on détectera des variations par rapport à une ligne de base pour laquelle la valeur de concentration en espèce gazeuse à analyser est nulle. L'état de référence est alors celui de concentration nulle en espèce gazeuse.

Les variations de la température du système sont mesurées par le biais des variations de résistance électrique dans le nanofil, ces variations de résistance électrique étant dues à la dépendance de la résistivité électrique d'un matériau à la température. La résistance thermique est, quant à elle, déterminée en mesurant la tension aux bornes du nanofil 2 par le voltmètre.

En déterminant la température locale du nanofil, il est possible de remonter à la ou aux concentrations en analyte dans le gaz porteur.

Nous allons maintenant expliquer comment s'effectue la détermination de la variation de déphasage, puis de la concentration à partir de la phase.

La puissance par effet Joule produite par le nanofil est égale à :

$$P_J = R_0 I^2$$

$R_0$ est la résistance électrique initiale du nanofil.

La source de courant 6 polarise le nanofil avec un courant alternatif $I = I_0 \cos(\omega t)$ (I) de pulsation $\omega$, il en résulte une création de puissance à la pulsation $2\omega$ :

$$P_J = \frac{R_0 I_0^2}{2}[1 + \cos(2\omega t)]$$

La température du nanofil dépend alors de la fréquence d'excitation et peut s'écrire :

$$T = T_{thermostat} + \Delta T(\omega t)$$

$T_{thermostat}$ étant la température du support et des plots d'ancrage.

Les variations de température $\Delta T(\omega t)$ dépendent d'une fonction de transfert thermique $H_{th}$, qui caractérise la capacité du système à échanger sa chaleur avec le mélange gazeux. Dans le cas présent, elle comporte un terme lié aux échanges par le silicium, et un terme lié aux échanges par le gaz. Par ailleurs elle contient une composante fréquentielle liée à la prise en compte des capacités thermiques.

La fonction de transfert thermique est de la forme :

$$H_{th}(j\omega) = \frac{\Delta T_d}{P_J} = \frac{R_{th}}{1 + jR_{th}C_{th}\omega_{th}}$$

La création de puissance dans le nanofil génère des variations de température dans le nanofil comprenant une composante statique et une composante à la pulsation 2ω et dont la phase et l'amplitude dépendent de la fonction de transfert thermique du système.

La variation de température peut s'écrire:

$$\Delta T = \Delta T_s + \Delta T_d \cos(\omega_{th}t + \phi) \ (\text{II})$$

Où $\omega_{th} = 2\omega$ est la pulsation du signal thermique, $\Delta T_s$ et $\Delta T_d$ sont respectivement l'amplitude des variations statique et dynamique, et $\Phi$ est le déphasage du signal de réponse.

Connaissant la fonction de transfert, il est possible de déduire le déphasage des variations de température.

Ainsi :

$$\phi = -\arctan(R_{th}C_{th}\omega_{th})$$

On constate que la phase du signal de réponse dépend de la résistivité et de la capacité thermique du gaz. En connaissant le déphasage, on connaît le produit $R_{th}C_{th}$.

Sur la figure 2, on peut voir représentée la fonction de transfert thermique $H_{th}$ représentée en termes de gain G en dB et phase Φ en ° en fonction de la fréquence en Hz. Le gain G correspond à l'atténuation thermique.

L'amplitude et la phase des variations de température dépendent donc de la fréquence d'excitation et des paramètres de la fonction de transfert. Dans le cas présent, la fonction de transfert est du type filtre passe-bas du 1er ordre. Il en résulte donc que, lorsque le signal d'excitation est lent (fréquence basse) par rapport au temps de réponse thermique du système, le système suit les variations de température du signal d'excitation, aucune phase n'apparaît. Si le signal d'excitation est trop rapide par rapport au temps de réponse thermique du système, la température du système ne varie pas.

La fréquence de résonance de la fonction de transfert varie avec la conductivité et la capacité thermique du gaz qui changent du fait de sa variation de concentration. En choisissant une fréquence d'excitation en tension proche ou égale à la ½ fréquence de coupure du système en l'absence de l'espèce gazeuse, la température du système varie avec une amplitude réduite par rapport à un régime quasi statique et avec un déphasage. A cette fréquence, la variation de déphasage est significative.

Nous allons maintenant décrire la méthode de détermination de la phase.

Les variations de température du système sont déterminées par mesure de la résistance électrique du nanofil. Cette dépendance est exprimée par le coefficient thermique de résistance (TCR ou Thermal coefficient of Resistivity en terminologie anglosaxonne).

La valeur de la résistance électrique en fonction de la température s'écrit :

$$R = R_0(1 + TCR.\Delta T)$$

La tension aux bornes du nanofil s'écrit :

$$V_{sin\omega} = RI = R_0(1 + TCR.\Delta T)I$$

Celle-ci dépend de la température.

Ainsi en mesurant la tension aux bornes du nanofil et en connaissant le TCR du nanofil, il est possible de connaître la température du système.

La résistance électrique du nanofil varie à la même fréquence et avec le même déphasage que le signal thermique.

En remplaçant ΔT et I par les relations (II) et (I) respectivement, on obtient :

$$V_{sin\omega} = RI = R_0\big(1 + TCR.(\Delta T_s + \Delta T_d \cos(\omega_{th} t + \phi))\big)I_0 \cos(\omega t),$$

On rappelle que $\omega_{th} = 2\omega$. Ainsi en linéarisant l'équation précédente on obtient :

$$V_{sin\omega} = R_0 I_0 \cos(\omega t) + R_0 I_0.TCR.\Delta T_s \cos(\omega t) + \frac{1}{2}R_0 I_0.TCR.\Delta T_d \cos(3\omega t + \phi)$$
$$+ \frac{1}{2}R_0 I_0.TCR.\Delta T_d \cos(\phi)$$

La composante 3ω de ce signal, qui correspond à la troisième harmonique du signal, étant égale à :

$$V_{3\omega} = \frac{1}{2}R_0 I_0.TCR.\Delta T_d \cos(3\omega t + \phi)$$ .

Cette tension de pulsation 3ω est l'image des variations de température du nanofil.

Par filtrage et détection synchrone, on détermine le déphasage du signal 3ω.

Il est alors possible à partir de la valeur de déphasage déterminée ci-dessus de calculer le produit $R_{th}C_{th}$.

Par ailleurs, comme cela a été indiqué plus haut le temps $\tau_{th}$ caractéristique de propagation de la chaleur dans un gap/entrefer de gaz est déterminé par sa résistivité thermique et sa capacité thermique. Ce temps est également appelé temps de réponse thermique et caractérise le temps de thermalisation du gaz. Lorsque la concentration du gaz varie le temps caractéristique varie.

Le temps caractéristique s'écrit:

$$\tau_{th} = \frac{1}{f_{th}} = 2\pi R_{th}C_{th}$$

$$R_{th} = \rho_{th}\frac{g}{S} \text{ et } C_{th} = c_v \rho g S$$

Avec

Où

$$\rho_{th} = \frac{1}{k_{th}}$$

est la résistivité thermique du gaz, *g* et *S* sont respectivement la largeur du gap/entrefer et la surface d'échange (section du gap), $C_v$ est la capacité calorifique du gaz et P sa masse volumique.

Ainsi, puisque l'on a déterminé le produit $R_{th}C_{th}$, on peut calculer le temps caractéristique $\tau_{th}$, et puisque l'on connaît le gaz, on peut en déduire sa concentration.

Par ailleurs, la cinétique des gaz nous dit que :

$$k_{th} \propto c_v \rho \lambda \langle v \rangle$$

Où $\lambda$ est le libre parcours moyen des molécules de gaz et $\langle v \rangle$ leur vitesse moyenne.

Finalement :

$$\tau_{th} \propto \frac{g^2}{\lambda \langle v \rangle}$$

Le gaz dont on souhaite mesurer la concentration est en général mélangé à un gaz porteur, par exemple l'hélium ou l'hydrogène.

A température et pression ambiantes le tableau suivant donne la valeur du rapport

$$\frac{g^2}{\lambda \langle v \rangle}$$

pour différents gaz pour un gap de 1 $\mu$m.

| Gaz | Hélium | Hydrogène | NH$_2$ | Toluène | Pentane |
|---|---|---|---|---|---|
| $1/\lambda \langle v \rangle$ (s) | $4{,}02.10^{-9}$ | $3{,}42.10^{-9}$ | $22.10^{-9}$ | $130.10^{-9}$ | $106.10^{-9}$ |

Dans le cas où l'analyte présente un temps de réponse long, et puisque l'hélium et l'hydrogène présentent des temps de propagation courts, i.e. ils se thermalisent rapidement, il est possible d'observer une forte variation du temps de réponse thermique du système lorsque la concentration en analyte varie.

De manière générale, on choisit un gaz porteur ayant un temps de propagation très différent des temps de propagation du ou des analytes.

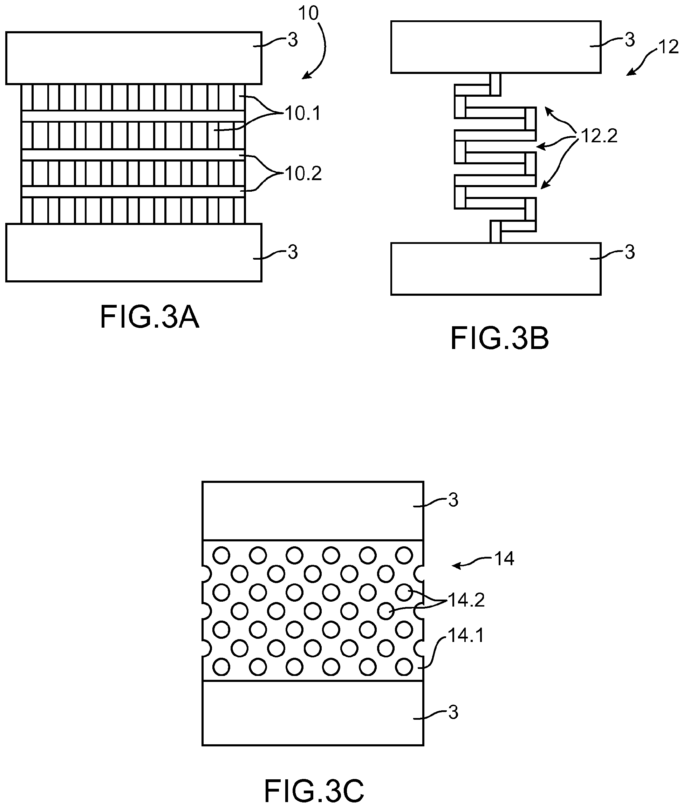

Sur les figures 3A à 3C, on peut voir des exemples de structures suspendues pouvant être mises en œuvre dans le capteur de concentration selon l'invention.

Sur la figure 3A, la structure suspendue 10 a la forme d'une grille formée par une pluralité de premiers nanofils parallèles 10.1 entre eux et suspendues entre deux plots d'ancrage 3. Les mesures effectuées sur chaque nanofils sont moyennées, ce qui permet de réduire le bruit du système. De préférence et comme cela est représenté, la structure comporte une pluralité de deuxièmes nanofils 10.2 transversaux aux premiers nanofils 10.1 et qui relient mécaniquement les premiers fils entre eux, assurant une meilleure rigidité mécanique de l'ensemble de la structure, évitant notamment un contact entre les premiers fils.

Sur la figure 3B, la structure suspendue 12 est formée d'une succession de créneaux 12.2 suspendus entre deux plots d'ancrage.

Sur la figure 3C, la structure suspendue 14 est formé par une plaque 14.1 percée de trous 14.2 disposés en quinconce, cette disposition relative des trous n'étant pas limitative.

Les exemples de figures 3B et 3C permettent d'offrir un système ayant une plus grande sensibilité par rapport au gaz en offrant une surface d'échanges plus importante.

On peut envisager de combiner ces structures, par exemple dans la structure de la figure 3A de remplacer les nanofils droits par des nanofils de la figure 3B.

De façon avantageuse, on peut prévoir un système de mesure comportant plusieurs capteurs ou plusieurs types de capteurs afin d'augmenter la résolution. En effet un évènement présent sur tous les capteurs sera considéré comme un signal alors qu'un évènement présent uniquement sur un capteur pourra être classé comme artefact de mesure. Cette redondance permet donc de rendre la mesure plus robuste et de séparer plus rapidement le signal du bruit et du fond continu.

La structure suspendue peut être en silicium, de préférence pour des températures de fonctionnement qui ne sont pas trop élevée pour éviter une oxydation du silicium.

De manière avantageuse, on peut prévoir de réaliser la structure de manière composite avec un support en silicium, formant support mécanique et de former une couche mince conductrice électrique sur le support, par exemple déposée de manière conforme à la surface des nanofils De préférence, le matériau de la couche présente un bon TCR et un point de fusion le plus haut possible autorisant ainsi des températures de fonctionnement élevées augmentant le rapport signal à bruit. Par exemple, la couche de conductrice peut être réalisée en tungstène, chrome, nickel ou en TiN.

De préférence, la couche conductrice forme également une couche d'encapsulation pour le silicium limitant ainsi son oxydation à haute température.

En variante, on pourrait réaliser des structures permettant de mettre en œuvre une transduction piézorésistive. Par exemple, en réalisant une structure à plusieurs couches minces présentant des coefficients de dilatation thermique différents et comportant au moins un matériau piézorésistif, on peut faire apparaître un effet bilame. On pourrait exploiter, l'effet bilame. Ainsi une variation des contraintes dans les couches minces apparaîtrait avec les variations de température de ces couches. Cette variation de contraintes entraînerait par effet piézorésistif une variation de la résistance qui serait mesurée comme cela a été expliqué ci-dessus.

De manière avantageuse, le capteur peut être intégré dans un circuit permettant une mesure différentielle, ce qui permet d'améliorer la détection des variations de phase en supprimant les signaux de mode commun. Par exemple on peut utiliser un montage de type pont de Wheatstone.

Un amplificateur différentiel peut également avantageusement être utilisé pour récupérer le signal en sortie de ce montage.

Dans un autre mode de réalisation, le capteur est intégré à une boucle à verrouillage permettant de travailler au point de plus grande sensibilité. La boucle est schématisée sur la figure 5.

Par exemple, la valeur du déphasage est fixée à $\Phi_0$ par l'utilisateur et un oscillateur contrôlé en tension 20 délivre le signal d'excitation. On mesure la variation du déphasage, puis une comparaison entre la commande et la valeur effective du déphasage est faite dans le comparateur 18 et permet de commander la fréquence de cet oscillateur afin de corriger la valeur du déphasage en temps réel par la boucle de rétroaction 22. On ne mesure donc plus de variation du déphasage, mais une variation de la fréquence de coupure. Connaissant la variation de la fréquence de coupure et du déphasage, on peut déterminer le produit $R_{th}C_{th}$ à partir de la relation $\phi = -\arctan(R_{th}C_{th}\omega_{th})$. Ensuite on détermine la concentration de l'analyte de la même manière qu'en travaillant avec la variation du déphasage.

Nous allons maintenant décrire un exemple de procédé de fabrication d'un capteur selon la présente invention. Le procédé n'entre pas dans le champ des revendications.

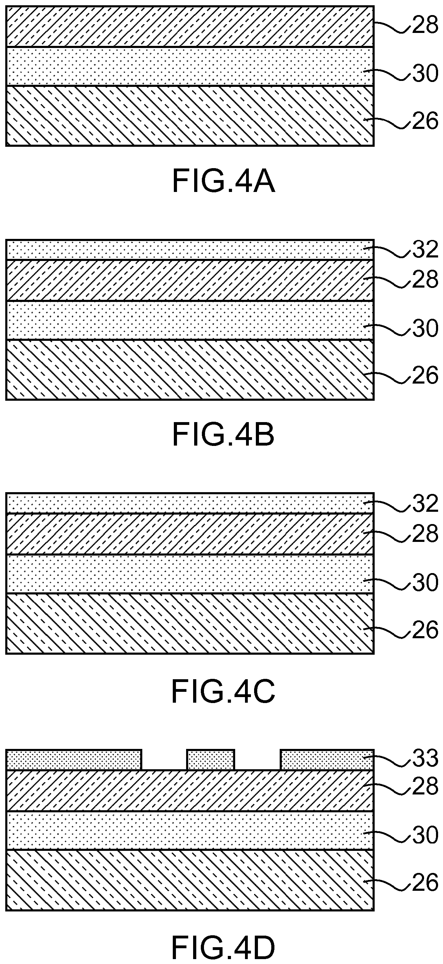

Sur les figures 4A à 4H, on peut voir des représentations schématiques de différentes étapes du procédé de réalisation.

Dans l'exemple décrit, on utilise une plaque de SOI (Silicon On Insulator) en terminologie anglaise ou silicium sur isolant, représenté sur la figure 4A. Le substrat SOI comporte une couche de silicium 26, une couche de silicium monocristallin 28, les couches 26, 28 étant séparées par une couche de $SiO_2$ 30. La couche de silicium 28 monocristallin forme la face avant.

Lors d'une première étape une couche de d'oxyde $SiO_2$ 32 est déposée sur la couche 28. L'élément ainsi formé est représenté sur la figure 4B.

Lors d'une étape suivante, on effectue un dopage P++ par exemple au bore, de la couche de silicium 28 située entre la couche d'oxyde 30 et la couche d'oxyde 32.

Le dopage au travers de la couche d'oxyde permet une répartition plus homogène des dopants dans la couche 28. Le dopage obtenu est de l'ordre de $1.10^{19}$ at./cm$^3$). Ce dopage a pour effet de maximiser le coefficient de température de résistance du silicium.

L'élément ainsi formé est représenté sur la figure 4C. Le dopage est symbolisé par des points.

Lors d'une étape suivante, on retire la couche d'oxyde 32 et on dépose une couche de résine 33, dans laquelle définit les contours des motifs dans la résine 32 par lithographie, par exemple par lithographie en UV profond (DUV pour Deep-UV en en terminologie anglaise) ou par une lithographie hybride DUV et à faisceau d'électrons (e-beam en terminologie anglaise). Ces procédé de lithographie sont bien connus de l'homme du métier et ne seront pas décrits en détail. La lithographie e-beam permet de s'affranchir des effets liés à la diffraction de la lumière lors de la gravure de dispositifs nanométriques.

L'élément ainsi formé est représenté sur la figure 4D.

Lors d'une étape suivante, la couche de silicium est gravée, par exemple par gravure ionique réactive ou RIE (Reactive Ion Etching en anglais) anisotrope.

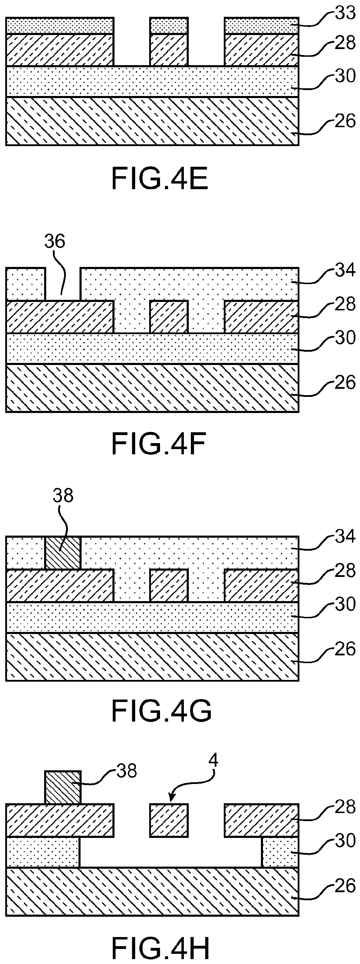

L'élément ainsi formé est représenté sur la figure 4E.

Lors d'une étape suivante, on effectue un dépôt chimique de $SiO_2$ 34 sur la couche de silicium gravée 28 qui est ensuite gravé pour délimiter les emplacements 36 des contacts électriques, par exemple gravure plasma.

L'élément ainsi obtenu est représenté sur la figure 4F.

On réalise ensuite les contacts électriques 38 en déposant par exemple de l'aluminium, par exemple dépôt par pulvérisation.

L'élément ainsi obtenu est représenté sur la figure 4G.

Lors d'une étape suivante, le nanofil est libéré, par exemple en gravant la couche 30, par exemple avec de l'acide fluorhydrique vapeur.

La structure libérée est visible sur la figure 4H.

Ce capteur de concentration de gaz est particulièrement adapté pour être associé à une microcolonne de chromatographie en phase gazeuse. Le capteur peut être disposé en sortie ou dans la colonne. La colonne sépare les différents composants d'un mélange contenu dans un gaz porteur, lorsque le capteur est en sortie, il voit différents analytes successivement et peut mesurer la concentration de chacun. L'ensemble forme alors un capteur de concentration multigaz robuste.

## Revendications

1. Capteur de concentration d'au moins une espèce gazeuse donnée comportant au moins une structure suspendue (2) dans un environnement gazeux par rapport à un support, ladite structure suspendue (2) étant en un matériau conducteur électrique, des moyens de polarisation de ladite structure suspendue (2) et des moyens de mesure (8) de la variation de la tension électrique aux bornes de la structure suspendue (2), les moyens de polarisation (6) étant formés par une source de courant alternatif dont l'intensité assure un échauffement de la structure suspendue (2) par effet Joule et dont la fréquence est telle qu'elle fait apparaître un déphasage entre un signal généré par les moyens de polarisation et un signal mesuré par les moyens de mesure, et des moyens de détermination d'une variation de déphasage due à une variation de concentration de l'espèce gazeuse et des moyens de détermination de la variation de concentration de ladite espèce gazeuse à partir de la variation de déphasage, **caractérisé en ce que** la fréquence des moyens de polarisation est fixée et est proche ou égale à la moitié d'une fréquence de coupure d'une fonction de transfert thermique du capteur dans un environnement gazeux donné.

2. Capteur de concentration selon la revendication 1, dans lequel la fréquence des moyens de polarisation (6) est proche ou égale à la moitié de la fréquence de coupure de la fonction de transfert thermique du capteur dans un environnement gazeux en l'absence de l'espèce gazeuse dont on souhaite mesurer la concentration.

3. Capteur de concentration selon la revendication 1 ou 2, dans lequel le signal mesuré, par les moyens de mesure, qui correspond à la tension aux bornes de la structure suspendue, est égal à une composante $3\omega$, qui correspond à la troisième harmonique du signal, cette composante étant avantageusement égale à

$$V_{3\omega} = \frac{1}{2} R_0 I_0 . TCR . \Delta T_d \cos(3\omega t + \phi) \quad,$$

$R_0$ étant la résistance électrique initiale de la structure suspendue,

   $I_0$ étant la valeur du courant défini par $I = I_0 \cos(\omega t)$,
   TCR étant le coefficient thermique de résistance,
   $\Delta T_d$ étant l'amplitude des variations dynamiques de température,
   $\phi$ étant le déphasage.

4. Capteur de concentration selon la revendication 1, 2 ou 3, dans lequel ladite structure présente un temps de réponse thermique faible, de préférence inférieur 100ms.

5. Capteur de concentration selon l'une des revendications 1 à 4, dans lequel la structure suspendue (2) est formée par au moins un nanofil.

6. Capteur de concentration selon la revendication 5, dans lequel le nanofil a une longueur inférieure à 1 mm et une section inférieure à $1\mu m \times 1\mu m$.

7. Capteur de concentration selon l'une des revendications 1 à 6, comportant plusieurs structures suspendues, chacune des structures suspendues étant polarisée et un signal étant mesuré aux bornes de chacune des structures suspendues par les moyens de mesure (8), ces signaux étant moyennés.

8. Dispositif de mesure de concentration d'au moins une espèce gazeuse contenue dans un environnement gazeux comportant une colonne de chromatographie et au moins un capteur de concentration selon l'une des revendications 1 à 7, le capteur étant disposé en sortie ou dans la colonne de chromatographie.

9. Procédé de mesure de la concentration d'au moins une espèce gazeuse au moyen d'un capteur de concentration selon l'une des revendications 1 à 7 utilisant la structure suspendue dans un environnement gazeux, ledit procédé comportant les étapes:

- application d'un signal de polarisation de la structure suspendue en matériau conducteur électrique à une fréquence donnée de sorte à échauffer la structure suspendue et de sorte qu'un déphasage existe entre le signal de polarisation et une variation de température de la structure suspendue,
- mesure de la variation du déphasage,
- détermination de la variation de concentration de l'espèce gazeuse.

10. Procédé de mesure de la concentration d'une espèce gazeuse selon la revendication 9, dans lequel dans l'environnement gazeux donné, la concentration en espèce gazeuse est nulle.

11. Procédé de mesure de la concentration d'au moins une espèce gazeuse selon la revendication 9 ou 10, dans lequel l'espèce gazeuse est en mélange avec un gaz porteur de sorte à former l'environnement gazeux, le gaz porteur étant choisi de sorte à présenter un temps de propagation thermique différent de celui de l'espèce gazeuse.


**Patentansprüche**

1. Konzentrationssensor für wenigstens eine gegebene Gasart, umfassend wenigstens eine Struktur (2), die in einer gasförmigen Umgebung mit Bezug zu einem Träger aufgehängt ist, wobei die Hängestruktur (2) aus einem elektrisch leitenden Material ist, Mittel zur Polarisation der Hängestruktur (2) und Mittel (8) zum Messen der Variation der elektrischen Spannung an den Anschlüssen der Hängestruktur (2), wobei die Polarisationsmittel (6) durch eine Wechselstromquelle gebildet sind, deren Intensität eine Erhitzung der Hängestruktur (2) durch den Joule-Effekt gewährleistet, und deren Frequenz derart ist, dass sie eine Phasenverschiebung bewirkt zwischen einem Signal, das durch die Polarisationsmittel generiert ist, und einem Signal, das durch die Messmittel gemessen ist, und Mittel zur Bestimmung einer Variation der Phasenverschiebung auf Grund einer Variation der Konzentration der Gasart sowie Mittel zur Bestimmung der Variation der Konzentration der Gasart ausgehend von der Variation der Phasenverschiebung, **dadurch gekennzeichnet, dass** die Frequenz der Polarisationsmittel fest ist und nahe bei oder gleich der Hälfte einer Grenzfrequenz einer thermischen Transferfunktion des Sensors in einer gegebenen gasförmigen Umgebung ist.

2. Konzentrationssensor nach Anspruch 1, bei dem die Frequenz der Polarisationsmittel (6) nahe bei oder gleich der Hälfte der Grenzfrequenz der thermischen Transferfunktion des Sensors in einer gasförmigen Umgebung in Abwesenheit der Gasart ist, deren Konzentration man messen möchte.

3. Konzentrationssensor nach Anspruch 1 oder 2, bei dem das durch die Messmittel gemessene Signal, das der Spannung an den Anschlüssen der Hängestruktur entspricht, gleich einer Komponente 3 ω ist, die der dritten Harmonischen des Signals entspricht, wobei diese Komponente vorzugsweise gleich

$$V_{3\omega} = \frac{1}{2} R_0 I_0 . TCR . \Delta T_d \cos(3\,\omega t + \phi) \, ,$$

ist, wobei

$R_0$ der elektrische Anfangswiderstand der Hängestruktur ist,
$I_0$ der Wert des Stroms ist, definiert durch $I = I_0 \cos(\omega t)$,
TCR der thermische Widerstandskoeffizient ist,
$\Delta T_d$ die Amplitude der dynamischen Temperaturvariationen ist,
$\Phi$ die Phasenverschiebung ist.

4. Konzentrationssensor nach Anspruch 1, 2 oder 3, bei dem die Struktur eine kleine thermische Antwortzeit aufweist, vorzugsweise unterhalb von 100 ms

5. Konzentrationssensor nach einem der Ansprüche 1 bis 4, bei dem die Hängestruktur (2) durch wenigstens einen Nanodraht gebildet ist.

6. Konzentrationssensor nach Anspruch 5, bei dem der Nanodraht eine Länge kleiner als 1mm und einen Querschnitt kleiner als $1\mu m \times 1\mu m$ hat.

7. Konzentrationssensor nach einem der Ansprüche 1 bis 6, umfassend mehrere Hängestrukturen, wobei jede der Hängestrukturen polarisiert ist, und ein Signal an den Anschlüssen von jeder der Hängestrukturen durch die Messmittel (8) gemessen wird, wobei diese Signale gemittelt werden.

8. Vorrichtung zur Messung der Konzentration wenigstens einer Gasart, die in einer gasförmigen Umgebung enthalten ist, umfassend eine Chromatographiesäule und wenigstens einen Konzentrationssensor nach einem der Ansprüche 1 bis 7, wobei der Sensor am Ausgang oder in der Chromatographiesäule angeordnet ist.

9. Verfahren zur Messung der Konzentration wenigstens einer Gasart mittels eines Konzentrationssensors nach einem der Ansprüche 1 bis 7 unter Verwendung der Hängestruktur in einer gasförmigen Umgebung, wobei das Verfahren die folgenden Schritte umfasst:

- Anlegen eines Signals zur Polarisation der Hängestruktur aus elektrisch leitendem Material mit einer gegebenen Frequenz derart, dass die Hängestruktur erhitzt wird, und derart, dass eine Phasenverschiebung zwischen dem Polarisationssignal und einer Temperaturvariation der Hängestruktur existiert,
- Messen der Variation der Phasenverschiebung,
- Bestimmen der Variation der Konzentration der Gasart.

10. Verfahren zur Messung der Konzentration einer Gasart nach Anspruch 9, bei dem in der gegebenen gasförmigen Umgebung die Konzentration der Gasart Null ist.

11. Verfahren zur Messung der Konzentration wenigstens einer Gasart nach einem der Ansprüche 9 bis 10, bei dem die Gasart in einer Mischung mit einem Trägergas derart ist, dass die gasförmige Umgebung gebildet wird, wobei das Trägergas derart ausgewählt ist, dass es eine thermische Ausbreitungszeit aufweist, die verschieden ist von jener der Gasart.

**Claims**

1. A concentration sensor for at least one given gas species comprising at least a suspended structure (2) in a gas environment with respect to a support, said suspended structure (2) being of an electrically conductive material, biasing means for biasing said suspended structure (2) and measuring means (8) for measuring the variation of the electric voltage at the terminals of the suspended structure (2), the biasing means (6) being formed by an alternating current source the intensity of which provides heating of the suspended structure (2) by Joule effect and the frequency of which is such that it gives rise to a phase shift between a signal generated by the biasing means and a signal measured by the measuring means, and means for determining a phase shift variation due to a concentration variation of the gas species and means for determining the concentration variation of said gas species from the phase shift variation, **characterised in that** the frequency of the biasing means is set and is close to or equal to half a cut-off frequency of a heat transfer function of the concentration sensor in a given gas environment.

2. The concentration sensor according to claim 1, wherein the frequency of the biasing means (6) is close to or equal to half the cut-off frequency of the heat transfer function of the concentration sensor in a given gas environment in the absence of the gas species the concentration of which is desired to be measured.

3. The concentration sensor according to claim 1 or 2, wherein the signal measured by the measuring means, corresponding to the voltage at the terminals of the suspended structure, is equal to a $3\omega$ component, corresponding to the third harmonic of the signal, the $3\omega$ component being advantageously equal to

$$V_{3\omega} = \frac{1}{2} R_0 I_0 . TCR . \Delta T_d \cos(3\omega t + \phi)$$ ,

$R_0$ being the initial electrical resistance of the suspended structure,
$I_0$ being the value of current defined by $I = I_0 \cos(\omega t)$,
TCR being the thermal coefficient of resistivity,
$\Delta T_d$ being the amplitude of dynamic temperature variations,
$\Phi$ being the phase shift.

4. The concentration sensor according to one of claims 1 to 3, wherein said suspended structure has a low heat response time, preferably lower than 100 ms.

5. The concentration sensor according to one of claims 1 to 4, wherein the suspended structure (2) comprises at least one nanowire.

6. The concentration sensor according to claim 5, wherein the nanowire has a length lower than 1 mm and a cross-section lower than 1 $\mu$m x 1 $\mu$m.

7. The concentration sensor according to one of claims 1 to 6, comprising several suspended structures, each of the suspended structures being biased and a signal being measured at the terminals of each of the suspended structures by the measuring means (8), these signals being averaged.

8. A device for measuring a concentration of at least one gas species contained in a gas environment comprising a chromatography column and at least one concentration sensor according to one of claims 1 to 7, said concentration sensor being disposed at the output of or within the chromatography column.

9. A method for measuring the concentration of at least one gas species by means of a concentration sensor according to one of claims 1 to 7 using said suspended structure in a gas environment, said method comprising the steps of:

   - applying a biasing signal to the suspended structure which comprises an electrically conductive material at a given frequency so as to heat the suspended structure and such that a phase shift exists between the biasing signal and a temperature variation of the suspended structure,
   - measuring a phase shift variation,
   - determining a concentration variation of the gas species.

10. The method for measuring the concentration of a gas species according to claim 9, wherein in the given gas environment, the concentration of gas species is null.

11. The method for measuring the concentration of at least one gas species according to one of claims 9 to 10, wherein the gas species is in a mixture with a carrier gas so as to form the gas environment, the carrier gas being selected so as to have a heat propagation time different from that a heat propagation time of the gas species.

FIG.1

FIG.2

FIG.5

FIG.3A

FIG.3B

FIG.3C

FIG.4A

FIG.4B

FIG.4C

FIG.4D

FIG.4E

FIG.4F

FIG.4G

FIG.4H

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2001044547 A
- US 2010154510 A1
- GB 2426592 A
- WO 2007117156 A1